# EUROPÄISCHE PATENTSCHRIFT

(11) **EP 3 889 557 B1**
(45) Veröffentlichungstag und Bekanntmachung des Hinweises auf die Patenterteilung: **15.02.2023**
(21) Anmeldenummer: 21174700.1
(22) Anmeldetag: 19.08.2016
(51) Int. Cl.: G01F 23/296, G01F 23/2962, G01S 7/00, G01S 7/521, G01S 15/88, F17C 13/02

(54) **FÜLLSTANDSMESSGERÄT**
FILL LEVEL SENSOR DEVICE
APPAREIL DE MESURE DE NIVEAU DE REMPLISSAGE

(30) Priorität: 21.08.2015 DE 102015113908; 12.02.2016 US 201615042890
(43) Veröffentlichungstag der Anmeldung: 06.10.2021
(62) Teilanmeldung aus: 16757208.0
(73) Patentinhaber: Truma Gerätetechnik GmbH & Co. KG, 85640 Putzbrunn (DE)
(72) Erfinder: MERKER, Johannes, 85640 Putzbrunn (DE); SCHMOLL, Andreas, 85640 Putzbrunn (DE); PLESS, Daniel, 85640 Putzbrunn (DE)
(74) Vertreter: Prinz & Partner mbB

(56) Entgegenhaltungen:
- WO-A1-2009/026672
- WO-A2-2010/111450
- DE-A1- 19 641 339
- GB-A- 2 498 952
- US-B1- 6 397 656
- E Sperrer: "CAN Bus Power", , 13 February 2012 (2012-02-13), XP055884137, Retrieved from the Internet: URL:http://www.stp-software.at/hilfe/CAN_S trom.htm [retrieved on 2022-01-26]

## Beschreibung

Die Erfindung betrifft ein Füllstandsmessgerät zum Messen des Füllstandes in einem Behälter durch dessen Wand hindurch mittels Ultraschall.

Durch eine Füllstandsmessung mittels Ultraschall kann der Füllstand im Behälter bestimmt werden, ohne dass ein Füllstandsmesser in das Innere des Behälters eingebracht oder der Behälter zum Messen geöffnet werden muss. Dies ist insbesondere bei Behältern von Vorteil, die unter einem hohen Druck stehen, beispielsweise Flüssiggasflaschen, oder aus anderen Gründen nicht zu öffnen sind.

Ein mobiles Füllstandsmessgerät zum Messen des Füllstandes mittels Ultraschall ist aus der DE 20 2011 110 687 bekannt. Es ist als Handmessgerät ausgeführt, das von einem Bediener bei Bedarf gegen die Wand des Behälters gedrückt wird, um einen Messvorgang auszuführen. Das Füllstandsmessgerät zeigt dann an, ob sich auf der Höhe, auf der das Messgerät angesetzt wurde, im Inneren des Behälters eine Flüssigkeit befindet oder nicht.

Aus der DE 198 20 482 C1 ist ein stationäres Füllstandsmessgerät bekannt, das in einen Sockel integriert ist, auf den eine Gasflasche gesetzt werden kann.

Aus der WO 2010/111450 A2 ist ein Füllstandsmessgerät bekannt, das an einem stationären Tank angebracht ist. Zur Energieversorgung ist entweder eine Batterie integriert oder ein Netzanschluss vorgesehen.

Aus der DE 196 41 339 A1 ist ein Füllstandsmessgerät bekannt, das von einer integrierten Batterie mit Energie versorgt wird. Auf diese Weise soll der Installationsaufwand gering gehalten werden.

Die Aufgabe der Erfindung besteht darin, ein Füllstandsmessgerät zu schaffen, das für stationäre Anwendungen über einen langen Zeitraum geeignet ist und dabei bei einer Vielzahl von unterschiedlichen Behältern und Behältertypen eingesetzt werden kann.

Zur Lösung dieser Aufgabe ist erfindungsgemäß ein Füllstandsmessgerät mit den Merkmalen des Anspruchs 1 vorgesehen.

Die Erfindung beruht auf dem Grundgedanken, in das Füllstandsmessgerät eine Befestigungsvorrichtung zu integrieren, sodass es dauerhaft am Behälter gehalten ist. Auf diese Weise kann das Füllstandsmessgerät für langfristige Messungen des Füllstandes verwendet werden. Weiterhin kann es für eine Vielzahl von unterschiedlichen Behältern eingesetzt werden, da es unabhängig von der speziellen Geometrie des Behälters flexibel an dessen Wand befestigt werden kann. Durch die drahtlose Kommunikationsschnittstelle können Füllstands-Messwerte nach außen übertragen werden, sodass sie einem Benutzer angezeigt werden können. Dabei entfällt der Aufwand für eine Verkabelung des Füllstandsmessgerätes. Durch die Energiequelle ist das Füllstandsmessgerät völlig autark. Zusätzlich ist in einen weitere Kommunikationsschnittstelle in der Form eines Steckers eine Leistungsversorgung für die Steuerung integriert.

Beispielhaft ist vorgesehen, dass die Befestigungsvorrichtung Magnete enthält. Diese Ausführungsform ermöglicht es, das Füllstandsmessgerät mit minimalstem Aufwand an allen Behältern anzubringen, die aus einem ferromagnetischen Material bestehen, also insbesondere an allen Stahlflaschen. Die Haftmagnete halten das Füllstandsmessgerät so lange in der gewünschten Position, bis es wieder abgezogen wird.

Beispielhaft ist vorgesehen, dass die Befestigungsvorrichtung einen Klebstoff enthält. Bei dieser Ausführungsform kann das Füllstandsmessgerät ähnlich wie ein Pflaster an der gewünschten Stelle an die Wand des Behälters geklebt werden, wo es dann dauerhaft verbleibt. Um das Füllstandsmessgerät, nachdem es von einem Behälter abgenommen wurde, am nächsten Behälter anzubringen, kann je nach Klebstoff die "alte" Klebstoffschicht weiterverwendet werden, oder es wird eine neue Klebstoffschicht aufgebracht.

Beispielhaft ist vorgesehen, dass die Befestigungsvorrichtung eine Federklammer enthält. Die Federklammer ist besonders geeignet, das Füllstandsmessgerät an abstehenden Teilen des Behälters anzubringen, beispielsweise einem Standring oder einem Griff.

Die Befestigungsvorrichtung kann auch einen Spanngurt enthalten. Dieser erstreckt sich um den Umfang des Behälters und drückt das Füllstandsmessgerät und insbesondere den Ultraschall-Messkopf gegen dessen Wand.

Vorzugsweise arbeitet die Sende-/Empfangseinheit nach dem Bluetooth-Standard. Dies ermöglicht es, die Füllstands-Messwerte bei geringem Energieverbrauch über eine Distanz zu übertragen, die für viele Anwendungen völlig ausreichend ist (beispielsweise im Campingbereich, für einen Grill, für Terrassenstrahler, einen Gastronomiebetrieb oder für Dachdecker).

Erfindungsgemäß ist vorgesehen, dass eine zusätzliche Kommunikationsschnittstelle in der Form eines Steckers vorgesehen ist. Auf diese Weise kann eine kabelgebundene Datenübertragung beispielsweise zu einem Bussystem (LIN-Bus oder CAN-Bus) erfolgen.

Die Energiequelle kann zwei Batterien enthalten. Mit diesen kann mit geringen Kosten eine Energieversorgung über einen ausreichend langen Zeitraum gewährleistet werden, beispielsweise bis zu einem Jahr.

Die Batterien sind dabei vorzugsweise austauschbar, sodass das Füllstandsmessgerät als solches über eine lange Zeit verwendet werden kann.

Beispielhaft ist vorgesehen, dass die Batterien im Abstand vom Ultraschall-Messkopf angeordnet sind. Dies ist unter Bauraum-Gesichtspunkten vorteilhaft bei Anwendungsfällen, bei denen das Füllstandsmessgerät am Boden einer Gasflasche verwendet wird. In diesem Fall befindet sich nämlich der Ultraschall-Messkopf üblicherweise an der tiefsten Stelle des Bodens, also dort, wo der geringste Abstand zum Untergrund vorhanden ist. Seitlich davon ist der Abstand zwischen dem Untergrund und dem Boden der Gasflasche größer, sodass dort die Batterien einfacher untergebracht werden können.

Vorzugsweise sind die beiden Batterien einander diametral entgegengesetzt am Außenrand des Füllstandsmessgeräts angeordnet, da dort der meiste Platz zur Verfügung steht.

Erfindungsgemäß ist ein Gehäuse vorgesehen, in das die Bauteile des Füllstandsmessgeräts integriert sind. Hierdurch ist das Füllstandsmessgerät einfach zu handhaben, und die Bauteile sind mechanisch geschützt.

Gemäß einer Ausgestaltung ist vorgesehen, dass das Gehäuse einteilig ist. Dies erleichtert es, das Füllstandsmessgerät am Behälter anzubringen.

Gemäß einer Ausgestaltung ist dabei vorgesehen, dass das Gehäuse aus einem Elastomerkunststoff besteht und in sich biegsam ist. Hierdurch kann das Füllstandsmessgerät flexibel an Behältern angebracht werden, die sich hinsichtlich der Krümmung der Wand unterscheiden, an die der Ultraschall-Messkopf angedrückt werden soll. Zusätzlich ergibt sich durch das Material ein besonders effektiver Schutz gegen äußere mechanische Belastungen, beispielsweise wenn der Behälter auf einen unebenen Untergrund abgestellt wird und das Füllstandsmessgerät Kontakt mit dem Untergrund hat.

Gemäß einer alternativen Ausgestaltung ist vorgesehen, dass das Gehäuse mehrteilig mit einem Gelenk zwischen den Teilen ausgeführt ist. Hierdurch kann das Füllstandsmessgerät flexibel an Behältern angebracht werden, die sich hinsichtlich der Krümmung der Wand unterscheiden, an die der Ultraschall-Messkopf angedrückt werden soll.

Beispielhaft ist dabei ein Federbügel zwischen den Teilen des Gehäuses vorgesehen. Hierdurch kann mit geringem Aufwand die gewünschte Andruckkraft des Ultraschall-Messkopfes gegen die Wand des Behälters erzeugt werden.

Der Ultraschall-Messkopf kann auch federnd im Gehäuse angeordnet sein, sodass er, wenn das Füllstandsmessgerät an der Wand des Behälters angebracht ist, mit der gewünschten Andruckkraft an der Wand des Behälters anliegt.

Beispielhaft sind Federn vorgesehen, die den Ultraschall-Messkopf gegen die Wand des Behälters beaufschlagen. Mit solchen Federn kann über lange Zeit die gewünschte Andruckkraft erzeugt werden.

Beispielhaft ist dabei vorgesehen, dass die Federn einstückig mit dem Gehäuse aus Kunststoff ausgeführt sind. Hierdurch wird der Aufwand zur Montage von separaten Federn vermieden.

Wenn die Befestigungsvorrichtung einen oder mehrere Magnete enthält, ist vorzugsweise eine Aufnahme für den Magnet/die Magnete vorgesehen, wobei die Aufnahme auf ihrer Seite zum Behälter hin von einer Gehäusewand verschlossen ist. Anders ausgedrückt: der Magnet (bzw. die Magnete) ist (bzw. sind) von der Wand des Behälters durch die Gehäusewand getrennt. Dies hat zwei Vorteile: zum einen ergibt sich ein Korrosionsschutz für die Magnete, da das Gehäuse die Magnete auf der zum Behälter weisenden Seite abschließt. Zum anderen werden die Magnetkräfte, die wirken, wenn das Gehäuse an einem Behälter angebracht ist, vom Gehäuse aufgenommen, ohne dass zusätzliche Maßnahmen notwendig sind, mit denen gewährleistet wird, dass der Magnet/die Magnete auch über eine lange Lebensdauer zuverlässig in der Aufnahme verbleibt/ verbleiben.

Beispielhaft ist ein Temperatursensor vorgesehen. Mit dem Temperatursensor kann die Messgenauigkeit erhöht werden, da die Schallgeschwindigkeit in Flüssigkeiten u. a. von der Temperatur abhängt. Hinzu kommt, dass der Flüssigkeitsstand im Behälter aufgrund der Wärmeausdehnung der Flüssigkeit ebenfalls temperaturabhängig ist. Wird als Flüssigkeit Flüssiggas betrachtet, ist festzustellen, dass die beiden Effekte gegenläufig und nicht-linear auf die Laufzeit des Schallsignals bei ansonsten unveränderter Gasmenge wirken, sodass zur Ermittlung der korrekten Flüssiggasmenge im Behälter eine temperaturabhängige Kompensation notwendig ist. Hierbei ist es ausreichend, wenn die Temperatur im Füllstandsmessgerät und somit in der Nähe des Behälters gemessen wird, da davon ausgegangen werden kann, dass die außerhalb des Behälters beispielsweise an dessen Unterseite gemessene Temperatur näherungsweise mit der Temperatur der Flüssigkeit im Inneren des Behälters übereinstimmt, jedenfalls wenn man Extremfälle wie einseitige Sonnenausstrahlung oder starke Temperaturänderungen ausklammert.

Vorzugsweise ist das Gehäuse mit einem Lastübertragungsabschnitt versehen, der in der Nähe des Koppelkissens angeordnet ist. Der Lastübertragungsabschnitt liegt entweder am Boden des Behälters an oder befindet sich in einem geringen Abstand vom Boden. Wenn das Füllstandsmessgerät übermäßig stark gegen den Behälter gedrückt wird, beispielsweise weil sich unterhalb des Gehäuses ein vorstehender Gegenstand befindet, werden die Belastungen direkt über den Lastübertragungsabschnitt auf den Behälter übertragen, so dass das Koppelkissen und der Messkopf vor hohen Kräften geschützt sind. Gleichzeitig ist das Gehäuse vor hohen Belastungen geschützt.

Der Temperatursensor kann in ein Koppelkissen integriert sein, das auf der Seite des Ultraschall-Messkopfes angeordnet ist, die der Wand des Behälters zugewandt ist. Hierdurch befindet sich der Temperatursensor in der Nähe der Wand des Behälters, während er gleichzeitig gut vor Umwelteinflüssen geschützt ist.

Das Koppelkissen besteht aus einem Elastomer und gewährleistet die gute Schallübertragung zwischen dem Ultraschall-Messkopf (insbesondere einem dort verwendeten Ultraschallgenerator wie einer Piezokeramik) und der Wand des Behälters, während gleichzeitig der Ultraschall-Messkopf vor einer direkten Berührung geschützt ist. Weiterhin kann das Koppelkissen, wenn es kompressibel genug ausgeführt ist, unterschiedliche Bauchigkeiten der Wand des Behälters und auch gewisse Toleranzen ausgleichen und dadurch jeweils eine gute Schallübertragung gewährleisten. Das Elastomer ist dabei so ausgelegt, dass bei den üblichen Andruckkräften die Fließgrenze des Elastomers nicht erreicht wird, so dass die Anpresskraft gegen die Wand des Behälters auch bei langem konstantem Andrücken aufrechterhalten wird.

Vorzugsweise ist die Elastizität des Koppelkissens so gewählt, dass es allein (also ohne dass Federn im Gehäuse notwendig sind) die notwendige Andruckkraft des Ultraschall-Messkopfes an die Wand des Behälters erzeugt, wenn das Füllstandsmessgerät durch die Wirkung der Befestigungsvorrichtung gegen die Wand des Behälters gedrückt wird. Diese Andruckkraft verformt das Koppelkissen so weit, dass es sich gut an die Wand des Behälters anschmiegt und die Ultraschallwellen gut von der Piezokeramik in die Wand des Behälters eingekoppelt werden, und umgekehrt.

Beispielhaft ist vorgesehen, dass die Steuerung ein Prognosemodul mit einem Speicher enthält. Dies ermöglicht es, einem Benutzer einen Schätzwert auf der Basis des Verbrauchs in der Vergangenheit zu liefern, bis wann der Vorrat im Behälter noch reicht.

Die Steuerung kann auch ein Kennlinienmodul enthalten, in dem der Verlauf einer Füllstandshöhe in Abhängigkeit vom Flüssigkeitsvolumen hinterlegt ist, das im Behälter vorhanden ist. Mit dem Kennlinienmodul kann die Genauigkeit der Füllstandsmessung erhöht werden, insbesondere dann, wenn sich der Querschnitt des Behälters über der Füllhöhe verändert. Ein Beispiel hierfür ist die bauchige Form einer Gasflasche im unteren Bereich.

Beim Betrieb des Füllstandsmessgerätes ist es vorteilhaft, wenn eine Abtastrate verwendet wird, die situationsabhängig ist. Allgemein ausgedrückt wird eine hohe Abtastrate, also eine vergleichsweise schnelle Abfolge von einzelnen Messvorgängen, dann verwendet, wenn die Steuerung aufgrund von externen Einflüssen erkennt, dass dies von Vorteil ist. Umgekehrt wird die Abtastrate verringert, wenn für die Steuerung erkennbar ist, dass eine hohe Abtastrate keinen Sinn macht. Mit diesen Maßnahmen lässt sich die Betriebszeit erhöhen, die mit einem Satz von Batterien erzielt werden kann.

Vorzugsweise wird, wenn die Steuerung erkennt, dass das Füllstandsmessgerät an einem neuen Behälter montiert ist, eine Reihe von Messungen ausgelöst, deren Ergebnis gemittelt wird, um einen Start-Füllstand zu bestimmen. Hierdurch steht einem Benutzer nach einer vergleichsweise kurzen Zeit ein zuverlässiger Füllstands-Messwert zur Verfügung.

Nachdem der Start-Füllstand bestimmt wurde, reduziert die Steuerung vorzugsweise die Abtastrate. Dies ist problemlos möglich, ohne dass sich die Genauigkeit des ermittelten Füllstandes verringert, da sich der Füllstand in beispielsweise einer Gasflasche auch bei maximalem Verbrauch nicht so stark ändert, als dass nicht eine Messung beispielsweise jede Minute ausreichend wäre.

Die Abtastrate kann weiter reduziert werden, wenn die Steuerung über einen längeren Zeitraum einen konstanten Füllstand ermittelt. Dies kann von der Steuerung so interpretiert werden, dass dem Behälter aktuell keine Flüssigkeit entnommen wird, sodass eine Messung beispielsweise einmal pro Stunde ausreichend ist. Sobald dann wieder eine Abnahme des Füllstandes erkannt wird, kann die Steuerung die Abtastrate auch wieder erhöhen.

Beispielhaft ist vorgesehen, dass die Steuerung, wenn sie keine Kommunikation des Füllstandsmessgeräts mit einem externen Empfänger erkennt, die Abtastrate stark reduziert oder die Messungen ganz einstellt. Vereinfacht ausgedrückt basiert diese Ausgestaltung auf dem Grundsatz, dass keine Messung durchgeführt wird, wenn niemand nach dem Füllstands-Messwert fragt. Ein Beispiel für diesen Vorgang ist ein Reisemobil, das außerhalb der Urlaubszeiten stillgelegt ist. Hierdurch ist auch ein Empfänger stillgelegt, der normalerweise mit dem Füllstandsmessgerät kommuniziert. Erkennt die Steuerung, dass keine Kommunikation möglich ist, kann die Abtastrate auf einen sehr geringen Wert oder sogar auf null reduziert werden. Wenn die Steuerung erkennt, dass wieder eine Kommunikation aufgebaut ist, kann wieder eine höhere Abtastrate verwendet werden. Es ist auch möglich, in diesem Fall anfänglich eine stark erhöhte Abtastrate zu verwenden, wie sie dann genutzt wird, wenn ein neuer Behälter erkannt wird.

Beispielhaft geht die Steuerung, wenn sie einen geringen Füllstand erkennt, von einer Auswertung eines ersten Echos der erzeugten Ultraschallwellen über zu einer Auswertung eines zweiten oder dritten Echos der Ultraschallwellen. Hierdurch ist auch bei einem geringem Füllstand eine zuverlässige Messung möglich. Bei einem geringen Füllstand im Behälter wird der zeitliche Abstand zwischen der Aussendung des Ultraschallsignals und dem Empfang des Echos immer kürzer. Erschwerend kommt hinzu, dass die Keramik nach Aussendung des Schallsignals noch eine Weile nachschwingt und daher nicht sofort empfangsbereit ist. Daher ist es u. U. schwierig, das erste Echo zu messen, also die erste Reflexion der Ultraschallwellen an der Grenzfläche zwischen Flüssigkeit und Gas. Üblicherweise wird die Wellenfront jedoch mehrfach reflektiert, also nach einer Reflexion an der Grenzfläche flüssig-gasförmig wieder am Boden des Behälters, dann wieder an der Grenzfläche, dann wieder am Boden, usw. Zwar werden diese Echos immer schwächer; dennoch sind sie grundsätzlich zur Auswertung geeignet.

Beispielhaft ist vorgesehen, dass die Sendeleistung des Ultraschall-Messkopfes, wenn eine geringe Füllhöhe vorliegt, verringert wird. Dies beruht auf der Erkenntnis, dass bei geringen Flüssigkeitsständen die Laufstrecke der Schallwellen geringer ist, so dass auch bei einer geringen Sendeleistung zuverlässig ein Echo am Ultraschall-Messkopf ankommt. Eine geringe Sendeleistung hat den Vorteil, dass die Nachschwingzeit nach Aussendung der Schallwelle geringer wird und so die Keramik schneller wieder empfangsbereit ist. So lassen sich geringere Flüssigkeitsstände messen.

Beispielhaft ist vorgesehen, dass die Steuerung, wenn sie die Unterschreitung eines definierten Füllstandes erkennt, veranlasst, dass der Benutzer einen besonderen Hinweis erhält. Dies kann eine Alarmmeldung auf dem Anzeigegerät sein (zum Beispiel auf dem Smartphone). Hierdurch wird gewährleistet, dass der Benutzter rechtzeitig geeignete Maßnahmen ergreift, zum Beispiel für Ersatz des leeren Flüssigkeitsbehälters sorgt.

Beispielhaft ist vorgesehen, dass die Steuerung, wenn sie die Unterschreitung eines definierten Füllstandes erkennt, veranlasst, dass ein neuer Behälter beschafft wird. In einer bevorzugten Ausführungsform wird dies erreicht, indem auf dem Smartphone eine Applikationssoftware dafür sorgt, dass eine Nachbestellung bei einem entsprechenden Dienstleister eingeleitet wird. Dies kann beispielsweise über eine Internetverbindung oder eine SMS-Kommunikation erfolgen. Diese Ausgestaltung ist besonders komfortabel, weil die Prozesskette zu einer unterbrechungsfreien Versorgung mit der zu messenden Flüssigkeit sorgt, ohne dass der Anwender selbst aktiv werden muss.

Beispielhaft kann dem Füllstandsmessgerät mindestens ein Abstandshalter zugeordnet sein, der am unteren Rand eines mit dem Füllstandsmessgerät zu versehenden Behälters angebracht werden kann. Mit dem Abstandshalter kann der Abstand zwischen dem Boden des Behälters und dem Untergrund erhöht werden, sodass dort das Füllstandsmessgerät auch dann zuverlässig angebracht werden kann, wenn der Behälter auf einem unebenen Boden (beispielsweise Kies) abgestellt wird. Mit den Abstandshaltern wird das Risiko verringert, dass der mit dem Füllstandsmessgerät versehene Behälter sich über das Füllstandsmessgerät am Untergrund abstützt, was eventuell zu einer Beschädigung des Füllstandsmessgeräts führen könnte.

Der Abstandshalter kann ein Sockel mit einem geschlossenen Boden sein. Ein solcher Sockel ist besonders dann bevorzugt, wenn der Behälter auf einem losen Untergrund abgestellt werden soll.

Der Sockel weist vorzugsweise zwei Positioniergestaltungen für zwei Arten von Behältern auf. Die Positioniergestaltungen können beispielsweise Ringe oder Klammern sein, mit denen der Sockel zuverlässig an einem Fußring des Behälters angebracht werden kann. Mit unterschiedlichen Positioniergestaltungen ist es möglich, ein und denselben Sockel für unterschiedliche Behälter zu verwenden.

Es kann auch vorgesehen sein, dass der Abstandshalter aus drei oder mehr Abstandshalterelementen besteht, die am unteren Rand des Behälters angeklipst werden können. Diese können von einem Benutzer flexibel dann montiert werden, wenn dies im Einzelfall vorteilhaft ist.

Vorzugsweise weist jedes Abstandshalterelement einen Schlitz eines ersten Typs und mindestens einen zweiten Schlitz eines weiteren Typs auf. Dies ermöglicht, dieselben Abstandshalterelemente bei unterschiedlichen Behältern zu verwenden.

Vorzugsweise werden die Abstandshalterelemente aus einem elastischen Kunststoff aufgebaut, so dass durch die Verformung die Schlitze weitere Behältertypen verwendet werden können, indem sich die Schlitze dem Behälterrand flexibel anpassen.

Die Erfindung wird nachfolgend anhand verschiedener Ausführungsformen beschrieben, die in den beigefügten Zeichnungen dargestellt sind. In diesen zeigen:
- Figur 1 in einer schematischen Schnittansicht ein erfindungsgemäßes Füllstandsmessgerät angebracht an einem Behälter;
- Figur 2 in einer schematischen Schnittansicht das Füllstandsmessgerät von Figur 1;
- Figur 3 in einer schematischen Schnittansicht ein Füllstandsmessgerät gemäß einer zweiten Ausführungsform;
- Figur 4 das Füllstandsmessgerät von Figur 3 in einer Draufsicht;
- Figur 5 in einer schematischen Schnittansicht ein Füllstandsmessgerät gemäß einer dritten Ausführungsform;
- Figur 6 schematisch die elektronischen Komponenten eines erfindungsgemäßen Füllstandsmessgeräts;
- Figur 7 in einem Diagramm die vom Füllstandsmessgerät verwendete Abtastrate über der Zeit;
- Figur 8 in einer perspektivischen, abgebrochenen Ansicht drei Abstandshalterelemente, die an einem Behälter angebracht sind; und
- Figur 9 in einer vergrößerten, perspektivischen Ansicht eines der in Figur 8 gezeigten Abstandshalterelemente.

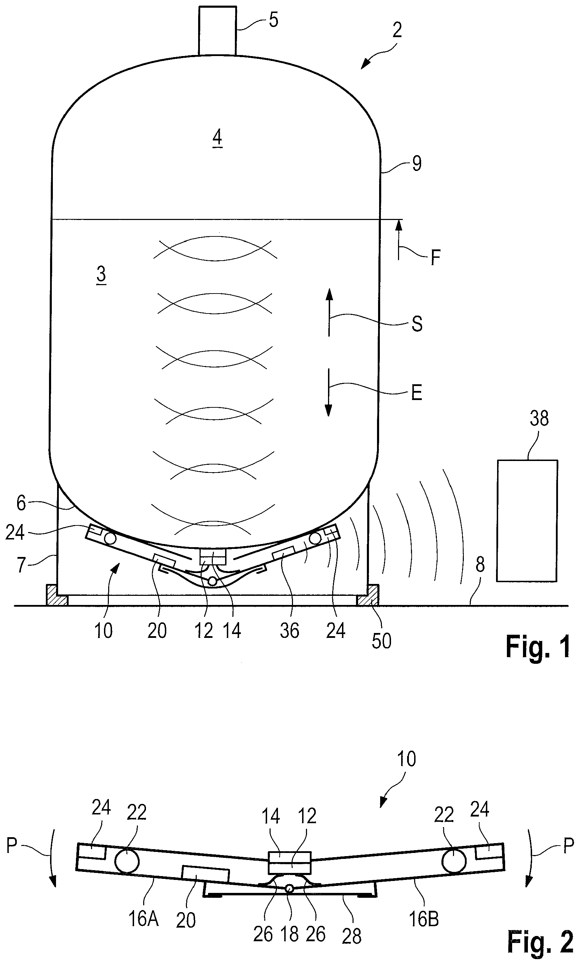

In Figur 1 ist ein Behälter 2 gezeigt, in dessen Innenraum sich eine Flüssigkeit 3 befindet Die Flüssigkeit 3 füllt den Innenraum des Behälters 2 bis zu einem Füllstand F; oberhalb des Flüssigkeitsspiegels befindet sich ein gasförmiges Medium 4. Bei diesem kann es sich um verdampfte Flüssigkeit 3 handeln oder um Luft, die einen gewissen Anteil an verdampfter Flüssigkeit 3 aufgenommen hat.

Im gezeigten Ausführungsbeispiel handelt es sich beim Behälter 2 um eine Flüssiggasflasche, die mit einem Gasanschluss 5, einem Boden 6 und einem Fußring 7 versehen ist. Mit dem Fußring 7 steht die Flüssiggasflasche auf einem Untergrund 8, beispielsweise dem Boden eines Gaskastens eines Reisemobils. Die Wand 9 der Flüssiggasflasche besteht aus einer ferromagnetischen Stahllegierung.

Am Boden 6 der Flüssiggasflasche ist ein Füllstandsmessgerät 10 angebracht, mit dem der Füllstand F innerhalb der Flüssiggasflasche und damit die Menge des sich in der Flüssiggasflasche befindenden Flüssiggases bestimmt werden kann.

Auch wenn das Füllstandsmessgerät 10 nachfolgend im Zusammenhang mit einer Flüssiggasflasche beschrieben wird, ist es grundsätzlich dafür geeignet und vorgesehen, bei anderen Arten von Behältern 2 verwendet zu werden. Es ist auch nicht zwingend notwendig, das Füllstandsmessgerät 10 am Boden 6 eines Behälters anzubringen. Das Füllstandsmessgerät 10 könnte beispielsweise auch an der Seitenwand oder auf der Oberseite des Behälters angeordnet sein.

Das Füllstandsmessgerät 10 arbeitet zur Bestimmung des Füllstandes F im Behälter 2 mit Ultraschall. Allgemein ausgedrückt werden Ultraschallwellen erzeugt, die in die Wand 9 des Behälters (beim gezeigten Ausführungsbeispiel konkret in den Boden 6) eingekoppelt werden. Von dort laufen die Ultraschallwellen als Signal S durch die Flüssigkeit und werden an der Grenzfläche zwischen flüssigem Medium und gasförmigem Medium reflektiert, sodass sie als Echo E zurücklaufen. Dieses Echo kann vom Füllstandsmessgerät 10 erfasst werden. Aus der Laufzeit der Schallwellen kann auf den Füllstand geschlossen werden, und dieser Füllstand kann, wenn die Geometrie des Behälters 2 bekannt ist, in eine Füllmenge (entweder Liter oder Kilogramm) umgerechnet werden.

Das Füllstandsmessgerät 10 weist einen Ultraschall-Messkopf 12 auf, der insbesondere eine Piezokeramik ist. Auf der dem Behälter 2 zugewandten Seite ist der Ultraschall-Messkopf 12 mit einem Koppelkissen 14 versehen, das aus einem Elastomer besteht, beispielsweise Silikon. Das Koppelkissen 14 dient dazu, die Schwingungen der Piezokeramik in die Wand des Behälters 2 einzukoppeln und umgekehrt die aus dem Echo E resultierenden Schwingungen der Wand des Behälters 2 wieder zur Piezokeramik zu übertragen.

Der Ultraschall-Messkopf 12 ist in einem Gehäuse 16 angeordnet, das hier zweiteilig ausgeführt ist. Es besteht aus einem Gehäuseteil 16A und einem Gehäuseteil 16B, die miteinander verbunden sind. Beim gezeigten Ausführungsbeispiel ist hier ein schematisch dargestelltes Scharnier 18 vorhanden.

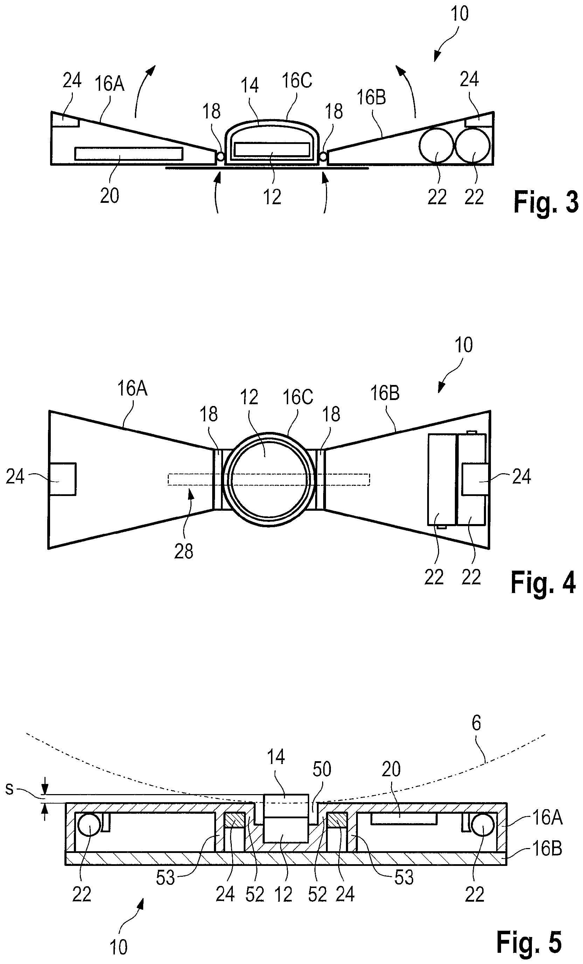

Das Füllstandsmessgerät 10 ist weiterhin mit einer Steuerung 20 versehen, mit der die Messung des Füllstandes vorgenommen werden kann. Einzelheiten der Steuerung werden später mit Bezug auf Figur 5 erläutert.

Es ist eine Energieversorgung in der Form von zwei austauschbaren Batterien 22 vorgesehen, die die zum Betrieb der Steuerung 20 notwendige elektrische Energie bereitstellt. Bei den Batterien kann es sich um handelsübliche Batterien der Größe AA handeln.

Die Batterien 22 sind dabei möglichst weit außen in den Gehäuseteilen 16A, 16B angeordnet, also mit großem Abstand vom Scharnier 18.

Um das Füllstandsmessgerät 10 am Behälter 2 befestigen zu können, ist eine Befestigungsvorrichtung 24 vorgesehen, die hier aus zwei Magneten besteht. Dabei ist in jedem Gehäuseteil 16A, 16B ein Magnet 24 angeordnet, und zwar auf der vom Scharnier 18 abgewandten Seite.

Der Ultraschall-Messkopf 12 ist im Gehäuse 16 elastisch federnd angeordnet, und zwar so, dass er aus dem Gehäuse 16 heraus zu der Seite hin beaufschlagt wird, auf der die Magnete 24 angeordnet sind.

Für die federnde Anbringung des Ultraschall-Messkopfes sind hier zwei Federn 26 vorgesehen.

Die Federn 26 können separate Federn sein, die in den Gehäuseteilen 16A, 16B montiert sind. Bevorzugt werden die Federn 26 jedoch einstückig mit den Gehäuseteilen 16A, 16B hergestellt, nämlich als Spritzgusselemente der Gehäuseteile 16A, 16B.

Das Gehäuse 16 ist mit einem Federbügel 28 versehen, der zwischen den beiden Gehäuseteilen 16A, 16B wirksam ist. Der Federbügel 28 beaufschlagt die beiden Gehäuseteile relativ zueinander in der Richtung der in Figur 2 gezeigten Pfeile P, also die Magnete 24 weg von einer "Oberseite", die definiert ist durch die Seite, auf der sich das Koppelkissen 14 befindet.

Um das Füllstandsmessgerät 10 am Behälter 2 anzubringen, wird es so am Boden 6 angesetzt, dass der Ultraschall-Messkopf 12 sich etwa am tiefsten Punkt des Bodens befindet. Dann werden die beiden Gehäuseteile 16A, 16B entgegen der Wirkung des Federbügels 28 so gegen den Boden 6 gedrückt, dass die Magnete 24 magnetisch am Boden 6 haften. Aufgrund der Wirkung des Federbügels 28 wird dabei das Gehäuse 16 im Bereich des Scharniers 18 gegen den gekrümmten Boden 6 des Behälters 2 gedrückt, wodurch der Ultraschall-Messkopf 12 mit seinem Koppelkissen 14 gegen den Boden 6 des Behälters 2 gedrückt wird. Die Federn 26 sorgen dabei für die gewünschte (im Hinblick auf das Übertragen von Ultraschallwellen nötige) Anpresskraft und auch für einen Toleranzausgleich.

In den Figuren 3 und 4 ist eine zweite Ausführungsform des Füllstandsmessgeräts 10 gezeigt. Für die von der ersten Ausführungsform bekannten Bauteile werden dieselben Bezugszeichen verwendet, und es wird insoweit auf die obigen Erläuterungen verwiesen.

Der Unterschied zwischen der ersten und der zweiten Ausführungsform besteht darin, dass bei der zweiten Ausführungsform die beiden Gehäuseteile 16A, 16B nicht aneinander, sondern an entgegengesetzten Seiten eines mittigen Gehäuseteils 16C angebracht sind. Im Gehäuseteil 16C ist der Ultraschall-Messkopf 12 angebracht. Hierfür können wie bei der ersten Ausführungsform Federn verwendet werden.

Als Scharnier 18 zwischen dem ersten Gehäuseteil 16A und dem dritten Gehäuseteil 16C bzw. dem dritten Gehäuseteil 16C und dem zweiten Gehäuseteil 16B wird anders als bei der ersten Ausführungsform kein festes Scharnier verwendet, sondern ein Elastomergelenk, welches die gewünschte Beweglichkeit zwischen den Gehäuseteilen ermöglicht.

In die Gehäuseteile 16A, 16B, 16C ist auch bei der zweiten Ausführungsform ein Federbügel 28 integriert, der die Gehäuseteile 16A, 16B, 16C in eine Ausgangsstellung beaufschlagt. In der Ausgangsstellung können sich die Unterseiten der drei Gehäuseteile in einer Ebene erstrecken (siehe Figur 3).

Ein weiterer Unterschied zwischen der ersten und der zweiten Ausführungsform besteht darin, dass bei der zweiten Ausführungsform die Energieversorgung (auch hier werden Batterien 22 verwendet) nicht aufgeteilt ist auf zwei Gehäuseteile, sondern dass zwei Batterien 22 nebeneinanderliegend in einem Gehäuseteil angeordnet sind (hier dem zweiten Gehäuseteil 16B). In der gleichen Weise wie bei der ersten Ausführungsform sind die Batterien 22 jedoch weit außen angeordnet.

Das Füllstandsmessgerät 10 gemäß der zweiten Ausführungsform wird in derselben Weise am Behälter montiert, wie dies für die erste Ausführungsform erläutert wurde. Wenn die beiden Gehäuseteile 16A, 16B so an die Wand des Behälters 2 angenähert werden, dass die Magnete 24 an der Wand 9 des Behälters haften, wird automatisch die gewünschte Vorspannung zwischen dem Ultraschall-Messkopf 12 und der Wand des Behälters erzeugt.

In Figur 5 ist ein Füllstandsmessgerät gemäß einer dritten Ausführungsform gezeigt. Für die von den vorhergehenden Ausführungsformen bekannten Bauteile werden dieselben Bezugszeichen verwendet, und es wird insoweit auf die obigen Erläuterungen verwiesen.

Bei der dritten Ausführungsform wird ein starres Gehäuse 16 verwendet, das aus einem Oberteil 16A und einem Unterteil 16B besteht. Die beiden Teile 16A, 16B können miteinander verclipst sein, so dass ein Benutzer die darin aufgenommenen Batterien 22 mit geringem Aufwand wechseln kann.

Alternativ ist auch möglich, auf der Unterseite zwei kleine Deckel zu jeweils einem Batteriefach vorzusehen, so dass ein Benutzer die Batterien wechseln kann, ohne die beiden Teile 16A, 16B voneinander zu trennen.

Der Unterschied zwischen der dritten und den ersten beiden Ausführungsformen besteht darin, dass bei der dritten Ausführungsform der Ultraschall-Messkopf 12 starr im Gehäuse angebracht ist.

Die nötige Vorspannung zwischen der Wand des Behälters 2 und dem Ultraschall-Messkopf 12 wird hier allein durch die Dimensionierung des Koppelkissens 14 und dessen Material erzielt.

Das Koppelkissen 14 steht geringfügig über die dem Behälter 2 zugewandte Seite des Gehäuses 16 über. Der Überstand s kann in der Größenordnung von 1 bis 2 mm betragen.

Wenn das Füllstandsmessgerät 10 an einen Behälter angesetzt wird (siehe die in Figur 5 gestrichelt angedeutete Bodenwand 6 eines Behälters), komprimiert dessen Wand das Koppelkissen 14 unter der Wirkung der Anziehungskraft der Befestigungsvorrichtung 24, so dass sich die gewünschte Vorspannung ergibt. Das Koppelkissen 14 kann dabei seitlich ausweichen, da zwischen dem Gehäuses 16 und dem Koppelkissen ein ringförmiger Freiraum 50 vorgesehen ist.

Der Überstand s des Koppelkissens definiert, wie weit das Koppelkissen 14 (bei einer Wand eines Behälters mit dem geringsten Krümmungsradius) maximal zusammengedrückt werden kann.

Ein weiterer Unterschied zwischen der dritten und den ersten beiden Ausführungsformen besteht darin, dass bei der dritten Ausführungsform im Gehäuse ein Lastübertragungsabschnitt 52 vorgesehen ist. Dieser dient dazu, Belastungen, die auf die vom Behälter 2 abgewandte Seite des Gehäuses 16 wirken, direkt auf die dem Behälter 2 zugewandten Seite des Gehäuses 16 und von dort auf die Wand des Behälters 2 zu übertragen.

Der Lastübertragungsabschnitt ist hier als von der Oberseite zur Unterseite des Gehäuses 16 durchgehender Materialabschnitt ausgeführt. Er ist ringförmig und umgibt den Ultraschall-Messkopf 12 und das Koppelkissen 14, so dass der Freiraum 50 vorhanden ist. Alternativ könnten auch mehrere getrennte, beispielsweise pfostenartig ausgeführte Lastübertragungsabschnitte verwendet werden.

Wenn auf das Füllstandsmessgerät 10 übermäßig hohe Belastungen wirken (beispielsweise wenn der mit dem Füllstandsmessgerät 10 versehene Behälter 2 auf einem Kiesboden abgesetzt wird und ein Stein gegen das Gehäuse 16 drückt), werden diese Belastungen durch das Gehäuse übertragen und in die Wand des Behälters 2 eingeleitet. Das Gehäuse kann dabei nicht beschädigt werden, da der Lastübertragungsabschnitt sich direkt vom Boden (hier: vom Unterteil 16B) zur Oberseite des Gehäuses 16 (hier: zum Oberteil 16A) erstreckt.

Gleichzeitig wird das Koppelkissen vor übermäßig hohen Belastungen geschützt, da sich an einer bestimmten Belastung die Oberseite des Gehäuses 16 am Behälter abstützt und das Koppelkissen 14 nicht weiter komprimiert werden kann.

Als Befestigungsvorrichtung kann ein ringförmiger Magnet 24 verwendet werden, der in einer ringförmigen Aufnahme 60 angeordnet ist. Der Boden der Aufnahme 60 (bei der in Figur 5 gezeigten Ausrichtung des Gehäuses: die Oberseite der Aufnahme) ist von einer Wand des Gehäuses gebildet. Die radial innenliegende Seite der Aufnahme ist hier vom Lastaufnahmeabschnitt 52 gebildet.

Wenn das Füllstandsmessgerät 10 an einem Behälter angebracht ist, zieht der Magnet das Gehäuse 16 gegen den Behälter, so dass das Füllstandmessgerät 10 an der Wand des Behälters fixiert ist. Gleichzeitig ziehen die Haftkräfte den Magneten 24 gegen die Wand, die die Aufnahme 60 begrenzt. Es ist also ausreichend, den Magneten 24 lediglich so zu sichern, dass er nicht aus der Aufnahme 60 herausfällt.

Die radial außenliegende Seite der Aufnahme (Materialabschnitt 53) erstreckt sich hier bis zum Unterteil 16B des Gehäuses 16 und wirkt somit als Teil des Lastübertragungsabschnitts 52.

Alternativ zu einem ringförmigen Magneten 24 können auch mehrere einzelne Magnete verwendet werden. Diese werden dann um den Ultraschall-Messkopf 12 herum angeordnet. Beispielsweise können drei Magnete verwendet werden, die in separaten Aufnahmen konzentrisch im Abstand von 120° um den Ultraschall-Messkopf 12 herum angeordnet sind.

Die Merkmale eines Lastübertragungsabschnittes 52 und einer Aufnahme für die Magnete, die auf der Seite des Behälters von einer Wand des Gehäuses 16 geschlossen ist, können einzeln oder in Kombination auch bei der ersten oder der zweiten Ausführungsform verwendet werden.

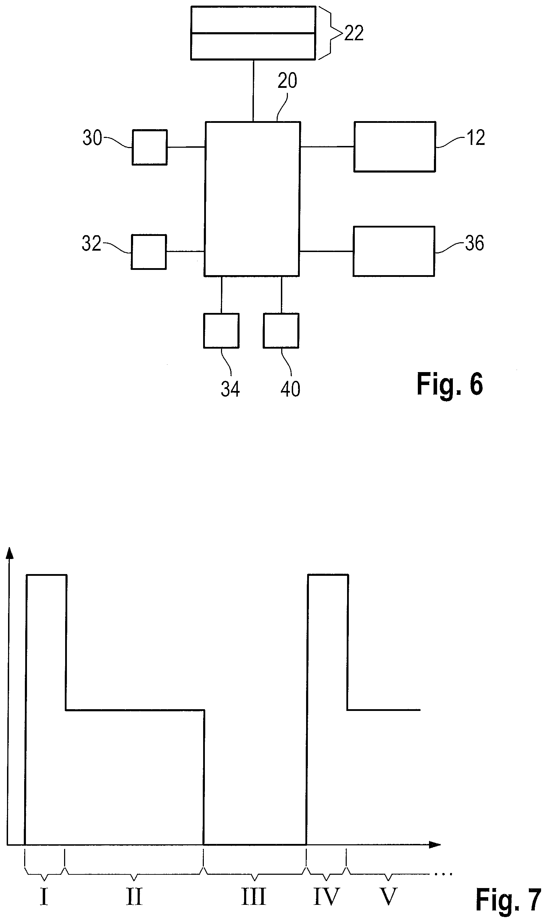

Bei allen Ausführungsformen des Gehäuses kann die Steuerung 20 (siehe Figur 6) den Ultraschall-Messkopf 12 geeignet ansteuern, um dort Ultraschallwellen zu erzeugen und zu erfassen, wenn ein Ultraschall-Echo auf den Ultraschall-Messkopf 12 trifft.

Um die Genauigkeit der Füllstandsmessung zu erhöhen, ist vorzugsweise ein Temperatursensor 30 vorgesehen, der es der Steuerung 20 ermöglicht, bei der Auswertung des Laufzeitsignals die (angenäherte) Temperatur der Flüssigkeit 3 im Behälter 2 zu berücksichtigen. Der Temperatursensor 30 kann beispielsweise in das Koppelkissen 14 eingegossen sein, sodass die von ihm gemessene Temperatur wenigstens zu einem gewissen Teil von der Temperatur der Wand 9 abhängt, gegen die das Koppelkissen 14 bei einer Messung gedrückt wird. Alternativ ist es möglich, den Temperatursensor 30 innerhalb des Gehäuses 16 anzuordnen.

Die Steuerung 20 verfügt weiterhin über ein Prognosemodul, mit dem die Steuerung 20 in Abhängigkeit vom aktuell vorhandenen Füllstand und abhängig von Verbrauchswerten aus der Vergangenheit hochrechnen kann, wie lange der Vorrat an Flüssigkeit 3 in der Flasche 2 noch hält (unter der Annahme, dass sich die Verbrauchswerte nicht erheblich ändern).

Weiterhin ist ein Kennlinienmodul 34 vorgesehen, in dem die Menge (oder das Volumen) von sich im Behälter 2 befindender Flüssigkeit 3 in Abhängigkeit vom Füllstand F niedergelegt ist. Im Kennlinienmodul 34 kann auch niedergelegt sein, um welche Art von Flüssigkeit 3 es sich im Behälter 2 handelt. Dies ist dann relevant, wenn das Füllstandsmessgerät 10 universell zur Füllstandsmessung in ganz unterschiedlichen Behältern verwendet werden soll, da unterschiedliche Flüssigkeiten unterschiedliche Schallgeschwindigkeiten haben, die bei der Füllstandsmessung berücksichtigt werden müssen.

Der Steuerung 20 ist eine Kommunikationsschnittstelle 36 zugeordnet, über die einem Benutzer das Ergebnis der Füllstandsmessung zur Verfügung gestellt wird.

Im gezeigten Ausführungsbeispiel handelt es sich bei der Kommunikationsschnittstelle 36 um eine drahtlose Kommunikationsschnittstelle, die nach dem Bluetooth-Standard arbeitet. Über diese ist es möglich, einem Empfänger 38 (siehe Figur 1) das Messergebnis zu senden.

Beim Empfänger 38 kann es sich beispielsweise um ein Smartphone eines Benutzers handeln. Dieses kann sich mit dem Füllstandsmessgerät 10 koppeln und entweder einen Messvorgang auslösen oder einen Füllstands-Messwert abrufen, der in einem Messwertespeicher 40 der Steuerung 20 hinterlegt ist.

Beim Empfänger 38 kann es sich auch um eine übergeordnete Gerätesteuerung handeln, beispielsweise in einem Reisemobil. Mit dieser werden zentral verschiedene Geräte wie ein Kühlschrank, eine Klimaanlage oder eine Wasserversorgung angesteuert und überwacht. Dieser Gerätesteuerung kann die Steuerung 20 des Füllstandsmessgeräts 10 einen Füllstands-Messwert übermitteln, sodass er einem Benutzer auf einem zentralen Bedienfeld angezeigt werden kann.

Der Messwertspeicher 40 gewährleistet auch, dass es keinerlei Datenverlust gibt, wenn die Kommunikation mit einem Empfänger 38 zwischenzeitlich verloren geht; dennoch sind beispielsweise Prognosedaten jederzeit wieder verfügbar. Außerdem können Messwerte problemlos mehreren Empfängern 38 zur Verfügung gestellt werden, auch wenn einige von ihnen erst kürzlich mit der Kommunikationsschnittstelle 36 verbunden wurden.

Wenn das Füllstandsmessgerät 10 neu an einem Behälter 2 angebracht wird, kann anfänglich mit einer hohen Abtastrate gearbeitet werden (siehe den Bereich I in Figur 7). Beispielsweise können Messungen des Füllstands in Intervallen von einer Sekunde durchgeführt werden. Die dabei ermittelten Messwerte werden gemittelt, sodass nach relativ kurzer Zeit (beispielsweise maximal einer Minute) recht zuverlässig der aktuelle Füllstand ermittelt ist. Anschließend (entweder zeitgesteuert oder wenn die Steuerung erkennt, dass die ermittelten Füllstände ausreichend stabil um einen Mittelwert schwanken) wird die Abtastrate verringert (siehe den Bereich 2 in Figur 7). Beispielsweise wird die Abtastrate auf eine Messung je Minute verringert. Diese Abtastrate ist ausreichend, um eine Änderung des Füllstandes F des Behälters 2 zu erfassen und auch eine Prognose über die Reichweite des verbleibenden Füllstandes abzugeben.

Wenn die Steuerung 20 über einen gewissen (u. U. vom Benutzer vorgebbaren) Zeitraum erkennt, dass sich der Füllstand F nicht ändert, kann die Abtastrate weiter verringert werden (siehe den Bereich III in Figur 7). Beispielsweise erfolgt nur noch eine Messung je Stunde.

Erkennt die Steuerung 20, dass mit der Kommunikationsschnittstelle 36 kein Empfänger 38 mehr gekoppelt ist, kann die Abtastrate auch auf Null herabgesetzt werden.

Auf ein äußeres Signal hin (entweder eine Änderung des Füllstandes hin oder auf ein Koppeln eines Empfängers 38 mit der Kommunikationsschnittstelle 36) wird die Abtastrate wieder erhöht (siehe den Bereich IV von Figur 7). Dabei können entweder, wie dies hier dargestellt ist, Messungen mit einer hohen Abtastrate vorgenommen werden (dies empfiehlt sich insbesondere, wenn in der Zwischenzeit eine Abtastrate von Null verwendet wurde), um zuverlässig einen Start-Füllstand bei einem u. U. ausgetauschten Behälter ermitteln zu können. Alternativ kann mit einer mittleren Abtastrate (entsprechend dem Bereich V von Figur 7) fortgefahren werden, um den Verbrauch und den sich dementsprechend ändernden Füllstand wieder zuverlässig weiterschreiben zu können.

Aufgrund der variablen Abtastrate und insbesondere aufgrund der Tatsache, dass die Abtastrate weitestgehend gesenkt wird, wenn dies ohne Einbußen hinsichtlich der Messgenauigkeit möglich ist, kann mit einem Satz von Batterien 22 eine Betriebsdauer von bis zu einen Jahr erhalten werden.

Bei verschiedenen Anwendungen kann es vorteilhaft sein, einen Abstandshalter 50 zwischen dem Behälter 2 und dem Untergrund 8 vorzusehen. Mit einem Abstandshalter 50 kann, wenn dieser aus Kunststoff besteht, ein Zwischenraum zwischen dem Fußring 7 und dem u. U. metallischen Boden eines Gaskastens erzeugt werden, wodurch die drahtlose Kommunikation zwischen der Kommunikationsschnittstelle 36 und dem Empfänger 38 verbessert wird.

Ein Abstandshalter 50 kann auch dann vorteilhaft sein, wenn der Behälter 2 mit dem daran angebrachten Füllstandsmessgerät 10 auf einem losen Untergrund abgesetzt werden soll, beispielsweise Kies. Hierbei besteht die Gefahr, dass sich der Fußring 7 in den Untergrund 8 eingräbt und das Füllstandsmessgerät 10 unter dem Gewicht des Behälters 2 gegen hervorstehende Bereiche des Untergrundes 8 gedrückt wird.

Der Abstandshalter 50 kann beispielsweise ein umlaufender Ring (siehe Figur 1) sein, der an den Durchmesser des Fußrings 7 angepasst ist und mit mehreren kleineren Magneten versehen sein kann, sodass er am Fußring 7 haftet. Dies erleichtert die Handhabung.

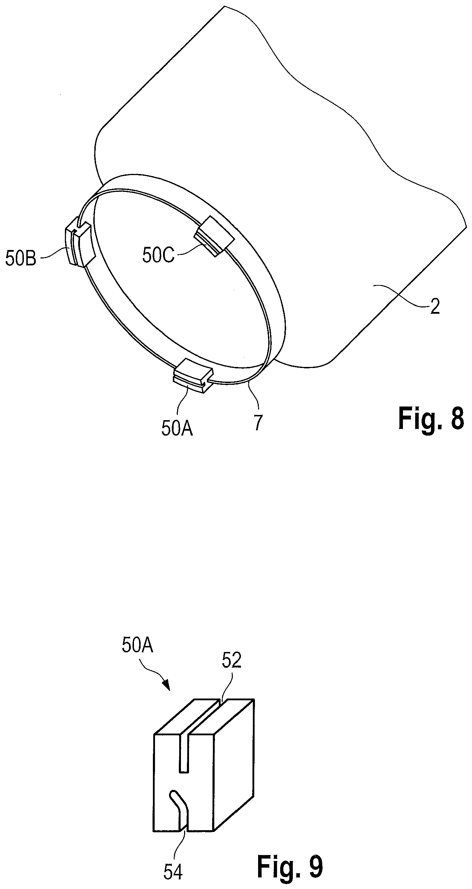

Der Abstandshalter 50 kann auch durch mehrere Abstandshalterelemente 50A, 50B, 50C gebildet sein, wie sie in den Figuren 8 und 9 dargestellt sind. Die Abstandshalterelemente 50A, 50B, 50C sind hier klipsartige Kunststoffteile, die mit einem Schlitz 52 eines ersten Typs und einem Schlitz 54 eines zweiten Typs versehen sind. Die Schlitze 52, 54 sind an unterschiedliche Fußringe 7 angepasst, sodass die Abstandshalterelemente bei unterschiedlichen Behältern 2 verwendet werden können. Je nach Behältertyp werden die Abstandshalterelemente in der einen oder anderen Ausrichtung am Fußring 7 angeklipst.

Das Füllstandsmessgerät 10 lässt sich auch mit anderen Ausführungen von Befestigungsvorrichtungen 24 an Behältern 2 anbringen. Beispielsweise kann eine Federklammer verwendet werden, mit der das Füllstandsmessgerät 10 innerhalb eines Fußrings 7 angebracht wird. Diese Federklammer kann sich dann an einem umgebördelten Randabschnitt des Fußrings 7 abstützen.

Es ist auch möglich, einen Spanngurt zu verwenden, um das Füllstandsmessgerät 10 am Umfang der Wand 9 anzubringen.

Das Füllstandsmessgerät 10 kann auch auf die Wand 9 des Behälters aufgeklebt werden.

Gemäß einer Ausführungsvariante ist das Füllstandsmessgerät 10 mit Strombegrenzungsdioden versehen, die gewährleisten, dass die der Steuerung 20 zur Verfügung gestellte Energie unterhalb gewisser Grenzen bleibt. Hierdurch ist es nicht notwendig, die Bauteile der Steuerung explosionssicher zu vergießen um das Füllstandsmessgerät problemlos in explosionsgefährdeten Bereichen einsetzen zu können.

## Patentansprüche

1. Füllstandsmessgerät (10) zum Messen des Füllstandes in einem Behälter (2) durch dessen Wand (9) hindurch mittels Ultraschall, mit einem Ultraschall-Messkopf (12), einer Steuerung (20) und einer Befestigungsvorrichtung (24), mittels der das Füllstandsmessgerät (10) so am Behälter (2) befestigt werden kann, dass der Ultraschall-Messkopf (12) gegen die Wand (9) des Behälters (2) gedrückt wird, wobei eine drahtlose Kommunikationsschnittstelle (36) vorgesehen ist, die eine Sende-/ Empfangseinheit enthält, und wobei ein Gehäuse (16) vorgesehen ist, in das die Bauteile Ultraschall-Messkopf (12), Steuerung (20), Befestigungsvorrichtung (24) und drahtlose Kommunikationsschnittstelle (36) des Füllstandsmessgeräts (10) integriert sind, wobei in dem Füllstandsmessgerät (10) eine Energiequelle (22) integriert ist, **dadurch gekennzeichnet, dass** eine weitere Kommunikationsschnittstelle in der Form eines Steckers vorgesehen ist, wobei
in die weitere Kommunikationsschnittstelle eine Leistungsversorgung (22) für die Steuerung (20) integriert ist.

2. Füllstandsmessgerät (10) nach Anspruch 1, **dadurch gekennzeichnet, dass** die weitere Kommunikationsschnittstelle für eine kabelgebundene Datenübertragung zu einem Bussystem vorgesehen ist.

## Claims

1. A filling level measuring device (10) for measuring the filling level in a container (2) through the wall (9) thereof by means of ultrasound, comprising an ultrasonic measuring head (12), a controller (20) and a fastening device (24) by means of which the filling level measuring device (10) can be fastened to the container (2) such that the ultrasonic measuring head (12) is pressed against the wall (9) of the container (2), wherein a wireless communication interface (36) is provided which contains a transmitter/receiver unit, and wherein a housing (16) is provided in which the ultrasonic measuring head (12), the controller (20), the fastening device (24) and the wireless communication interface (36) of the filling level measuring device (10) are integrated, wherein an energy source (22) is integrated in the filling level measuring device (10), **characterized in that** a further communication interface in the form of a plug is provided, wherein a power supply (22) for the controller (20) is integrated in the further communication interface.

2. The filling level measuring device (10) according to claim 1, **characterized in that** the further communication interface is provided for a cable-bound data transmission to a bus system.

## Revendications

1. Appareil de mesure de niveau (10) pour mesurer le niveau dans un récipient (2) à travers la paroi (9) de celui-ci par ultrasons, présentant une tête de mesure à ultrasons (12), une commande (20) et un dispositif de fixation (24) au moyen duquel l'appareil de mesure de niveau (10) peut être fixé sur le récipient (2), de telle sorte que la tête de mesure à ultrasons (12) est poussée contre la paroi (9) du récipient (2), une interface de communication sans fil (36) qui comprend une unité d'émission/de réception étant prévue, et un boîtier (16) étant prévu dans lequel les composants tels que la tête de mesure à ultrasons (12), la commande (20), le dispositif de fixation (24) et l'interface de communication sans fil (36) de l'appareil de mesure de niveau (10) sont intégrés, une source d'énergie (22) étant intégrée dans l'appareil de mesure de niveau (10), **caractérisé en ce qu'**il est prévu une interface de communication supplémentaire sous forme de connecteur, une alimentation en puissance (22) pour la commande (20) étant intégrée dans l'interface de communication supplémentaire.

2. Appareil de mesure de niveau (10) selon la revendication 1, **caractérisé en ce que** l'interface de communication supplémentaire est prévue pour une transmission de données par câble vers un système de bus.
